# EUROPEAN PATENT APPLICATION

(11) **EP 2 393 314 A1**
(43) Date of publication of application: **07.12.2011**
(21) Application number: 10735876.4
(22) Date of filing: 28.01.2010
(51) Int. Cl.: H04W 4/22, H04M 1/738, H04M 11/04, H04W 36/24, H04W 48/18

(54) **MOBILE STATION AND MOBILE COMMUNICATION METHOD**

(30) Priority: 30.01.2009 JP 2009020633
(71) Applicant: NTT DOCOMO, INC., Chiyoda-ku Tokyo 100-6150 (JP)
(72) Inventor: KANAUCHI, Masashi, Tokyo 100-6150 (JP); OHASHI, Aki, Tokyo 100-6150 (JP); SUZUKI, Keisuke, Tokyo 100-6150 (JP); TANAKA, Itsuma, Tokyo 100-6150 (JP)
(74) Representative: HOFFMANN EITLE
(86) International application number: PCT/JP2010/051160
(87) International publication number: WO 2010/087411

(57) **Abstract**

A mobile station (UE) according to the present invention includes: an emergency call originating process unit configured to originate an emergency call via a cell under the control of a UMTS-scheme network having a circuit switching network, when an emergency call originating trigger is detected while camping on a cell under the control of an LTE-scheme network that is a packet switching dedicated network, and when it is determined that camping on the cell under the control of the UMTS-scheme network is possible.

## Description

### TECHNICAL FIELD

The present invention relates to a mobile station and a mobile communication method.

### BACKGROUND WART

In a "PS (Packet Switching) dedicated network" represented by an LTE (Long Term Evolution)-scheme network, it is generally considered to provide a voice service by way of a service such as VoIP (Voice over IP), i.e. , a service of transmitting and receiving voice by carrying voice codec on a packet.

However, when a communication continuity (handover process, etc.) with a voice service in a UMTS (Universal Mobile Telecommunications System)-scheme network having an existing circuit switching network (CS (Circuit Stitching) network) is taken into consideration, a technical hurdle must be overcome before the provision of the voice service by way of the VoIP.

Further, when there is a service provided only by a CS network, a mobile station UE cannot take advantage of the service in the PS dedicated network.

Thus, as a method used when the mobile station UE wishes to take advantage of a circuit switching service (CS service) such as a voice service in the PS dedicated network, a method is known in which the mobile station UE switches a connection in the PS dedicated network to a connection in the UMTS-scheme network, etc. having a CS network so as to originate and terminate a CS service.

When such a method is performed between the LTE-scheme network and the UMTS-scheme network, between the LTE-scheme network and a GSM (Global System for Mobile Communications) -scheme network, or between the LTE-scheme network and a CDMA2000-scheme network, this method is called "CS Fallback (CSFB)".

When the mobile station UE performs the CS fallback on the network having a CS network from the PS dedicated network to originate a CS service, the mobile station UE needs to implement the following operations:

(1) In a mobile station UE where a connection is established in the PS dedicated network, an NAS (Non Access Stratum) function transmits a CS-originating request to an AS (Access Stratum) function;

(2) The AS function transmits a fallback request to a CS network, to the PS dedicated network;

(3) The PS dedicated network transmits a handover command to a CS network or an RAT (Radio Access Technology) change request, to the mobile station UE; and

(4) The mobile station UE originates a CS service, in the CS network.

Differences between the originating operation of the CS service and that of a normal CS service can be found in the operations (2) and (3) (i.e., the fallback process).

The fallback process is configured by: a process in which the mobile station UE notifies the PS dedicated network of a desire to use the CS service, and the PS dedicated network performs a preparation of switching to the connection in a network having a CS network; and a process in which a handover request to a cell under the control of the CS network or an RAT change request to a network (RAT) having a CS network is transmitted to the mobile station UE.

An operation after the end of the fallback process, i.e., an operation after (4), is the same as the normal originating process.

According to the 3GPP, in the LTE scheme, it is not possible to provide the CS service, and thus, the mobile station UE is configured to use the CSFB so as to originate and terminate an emergency call via the cell under the control of the UMTS-scheme network or the cell under the control of the GSM-scheme network.

### SUMMARY OF THE INVENTION

### PROBLEM TO BE SOLVES BY THE INVENTION

However, in the LTE-scheme network, a user identifier that can be set to a message "Extended Service Request message transmitted by the mobile station UE at the time of originating the emergency call is "M-TMSI (M-Temporary Mobile Subscriber Identify" only.

As a result, there is a problem that the M-TMSI is a user identifier assigned only to a mobile station UE in an Attach state, and thus, the mobile station UE cannot originate an emergency call in a non-Attach state such as in the case of the UMTS-scheme network or the GSM network, in the LTE-scheme network.

Moreover, even when the mobile station UE is in the Attach state and possesses the M-TMSI, once the mobile station UE moves to an area where a location registration regulation takes place, if the mobile station UE originates the emergency call to a mobile switching center MME other than a packet switching center MME that has paid out the M-TMSI (i.e., transmits "Extended Service Request message"), the packet switching center MME rejects the originating of the emergency call because it does not recognize the M-TMSI included in the "Extended Service Request message", and as a result, the packet switching center MME urges the mobile station UE to perform a location registration (i.e., transmits "Service Reject (#9: UE identity cannot be derived by the network)".

However, there is a problem that the location registration cannot be performed in the area where the mobile station UE is now located, and thus, in such a case, the mobile station UE cannot originate the emergency call.

Therefore, the present invention is intended to overcome the above-described problem. An object of the present invention is to provide a mobile station capable of originating an emergency call via a CS network even in a state of camping on a PS dedicated network, and a mobile communication method therefor.

### MEANS FOR SOLING THE PROBLEM

A first aspect of the present invention is summarized as a mobile station, including: an emergency call originating process unit configured to originate an emergency call via a cell under the control of a second network having a circuit switching network, when an emergency call originating trigger is detected while camping on a cell under the control of a first network that is a packet switching dedicated network, and when it is determined that camping on the cell under the control of the second network is possible.

A second aspect of the present invention is summarized as a mobile communication method, including the steps of: determining whether or not a camping on a cell under the control of a second network having a circuit switching network is possible, when an emergency call originating trigger is detected while camping on a cell under the control of a first network that is a packet switching dedicated network in the mobile station; and originating an emergency call via the cell under the control of the second network, when it is determined that the camping on the cell under the control of the second network in the mobile station is possible.

### EFFECT OF THE INVENTION

As described above, according to the present invention, it is possible to provide a mobile station capable of issuing an emergency call via a CS network even in a stated of camping on a PS dedicated network, and a mobile communication method therefor.

### BRIEF DESCRIPTION OF THE DRAWINGS

[Fig. 1] Fig. 1 is a functional block diagram of a mobile station according to a first embodiment of the present invention.
[Fig. 2] Fig. 2 is a sequence diagram illustrating an internal operation of the mobile station according to the first embodiment of the present invention.
[Fig. 3] Fig. 3 is a diagram explaining a situation where a mobile station originates an emergency call in a mobile communication system according to the first embodiment of the present invention.

### BEST MODES FOR CARRYING OUT THE INVENTION

### (Mobile station according to first embodiment of the present invention)

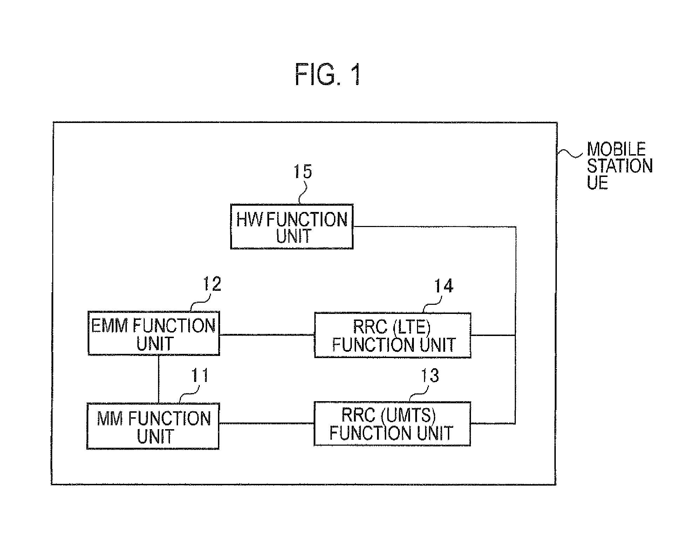

The mobile station according to a first embodiment of the present invention is described with reference to Fig. 1 to Fig. 3.

A mobile station UE according to this embodiment is configured to perform communication in the LTE-scheme network (first network) which is a PS dedicated network, and the UMTS-scheme network (second network) having a CS network.

It is noted that in this specification, the LTE-scheme network is described as an example of the PS dedicated network; however, a network of another scheme may be used as the PS dedicated network.

Moreover, similarly, in this specification, the UMTS-scheme network is described as an example of the network (RAT) having a CS network; however, a network of another scheme such as a GSM-scheme network and a CDMA2000-scheme network may be used as the network (RAT) having a CS network.

The mobile station UE includes an emergency call originating process unit configured to originate an emergency call via a CS network, not via a PS network. The description of the configuration of the mobile station UE will be provided below with an emphasis on a configuration relating to the emergency call originating process unit.

As illustrated in Fig. 1, as the configuration relating to the emergency call originating process unit, the mobile station UE includes: an MM (Mobility Management) function unit 11; an EMM (EPS Mobility Management) function unit 12; an RRC (UMTS) function unit 13; an RRC (LTE) function unit 14; and an HW function unit 15.

The MM function unit 11 functions as a movement management task in the UMTS scheme, and the EMM function unit 12 functions as a movement management task in the LTE scheme.

Moreover, the RRC (UMTS) function unit 13 is configured to perform an RRC protocol process in the UMTS scheme, and the RRC (LTE) function unit 14 is configured to perform an RRC protocol process in the LTE scheme.

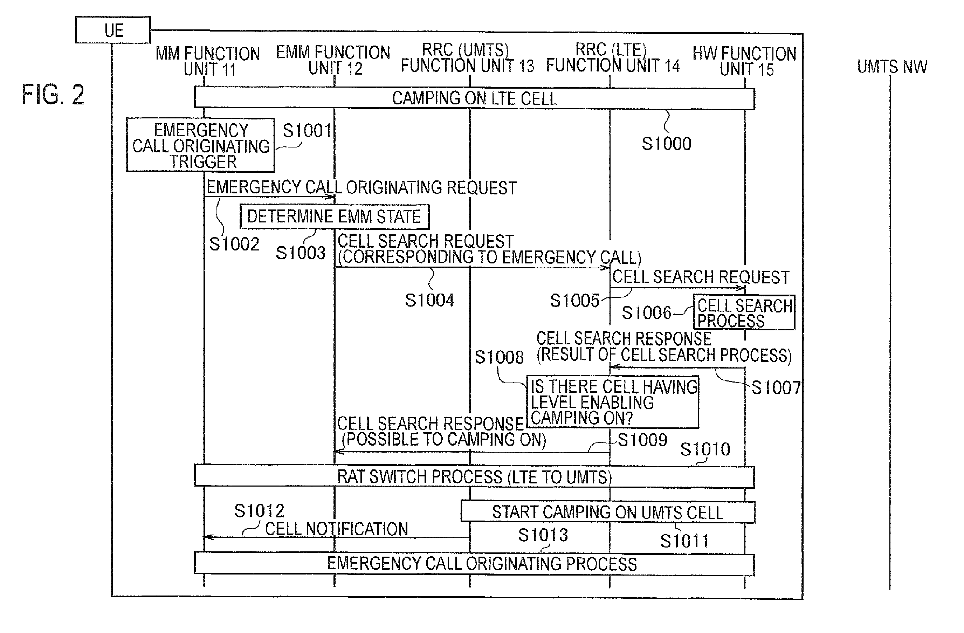

With reference to Fig.2, a specific function and operation of the above-described function units 11 to 15 will be explained, below.

As illustrated in Fig. 2, the configuration is such that while the mobile station UE is camping on a cell under the control of the LTE-scheme network (hereinafter, "LTE cell") as illustrated in step 51000, if the MM function unit 11 detects an emergency call originating trigger as illustrated in step S1001, then the MM function unit 11 transmits an emergency call originating request to the EMM function unit 12 as illustrated in step S1002.

The EMM function unit 12 is configured to determine an ECM (EPS Connection Management) state of the mobile station UE, upon receiving the emergency call originating request from the MM function unit 11, as illustrated in step S1003.

Specifically, the EMM function unit 12 is configured to determine as to whether or not the ECM state of the mobile station UE is in an "ECM_IDLE state" or an "ECM__CONNECTED state".

In this case, when the ECM state of the mobile station UE is in the "ECM IDLE state", the mobile station UE is in a non-communication state in the LTE cell. On the other hand, when the ECM state of the mobile station UE is in the "ECM_CONNECTED state", the mobile station UE establishes an RRC connection in the LTE cell, and therefore, in a communication state.

The EMM function unit 12 may be configured to switch a first connection in the LTE-scheme network to a second connection in the UMTS-scheme by performing the CSFB procedure, upon determination that the ECM state of the mobile station UE is in the "ECM_CONNECTED state".

The MM function unit 1 is configured to originate an emergency call via the second connection, after the above operation.

On the other hand, upon determination that the ECM state of the mobile station UE is in the "ECM_IDLE state", the EMM function unit 12 is configured to transmit a cell search request indicative of "corresponding to emergency call", to the RRC (LTE) function unit 14, as illustrated in step S1004.

The RRC (LTE) function unit 14 is configured to transmit the cell search request received from the EMM function unit 12, to the HW function unit 15, as illustrated in step S1005.

The HW function unit 15 is configured to perform a cell search process in response to the cell search request received from the RRC (LTE) function unit 14, as illustrated in step S1006, and to transmit a cell search response including a result of the cell search process, to the RRC (LTE) function unit 14, as illustrated in step S1007.

Specifically, the HW function unit 15 is configured to search a frequency of a cell under the control of the UMTS-scheme network (hereinafter, "UMTS cell"), in response to the above-described cell search request.

The RRC (LTE) function unit 14 is configured to determine as to whether or not there is a UMTS cell from which the mobile station UE can expect to communicate in response to the result of the cell search process included in the cell search response received from the HW function unit 15, as illustrated in step S1008 .

For example, the RRC (LTE) function unit 14 is configured to use a specific UMTS cell as the UMTS cell from which the mobile station UE can expect to communicate, when a reception level in the specific UMTS cell is larger than a predetermined threshold value.

Moreover, the RRC (LTE) function unit 14 is configured to transmit a cell search response including information specifying the UMTS cell from which the mobile station UE can expect to communicate, to the EMM function unit 12, as illustrated in step S1009.

In this case, the RRC (LTE) function unit 14 may be configured to transmit the above-described cell search response including the information specifying the UMTS cell from which the mobile station UE can expect to communicate, to the EMM function unit 12, even when the reception level in the UMTS cell is smaller than the reception level (electric field intensity) in the LTE cell.

Moreover, the RRC (LTE) function unit 14 may be configured to transmit the cell search response including the information specifying the UMTS cell fromwhich the mobile station UE can except to communicate, to the EMM function unit 12, even when a priority used when determining a camp-on cell set to the UMTS cell (camp-on priority) is lower than a priority used when determining the camp-on cell set to the LTE cell.

It is noted that the priority is to be notified by broadcast information or dedicated information (RRC Connection Release) in the LTE-scheme network.

As illustrated in step S1010, the EMM function unit 12 is configured to start an RAT switch process from the LTE scheme to the UMTS scheme, in response to the cell search response received from the RRC (LTE) function unit 14, and after the completion of the RAT switch process, the RRC (UMTS) function unit 13 is configured to start camping on the UMTS cell, as illustrated in step S1011, and to notify the MM function unit 11 of the UMTS cell on which the camping on is startled, as illustrated in step S1012.

The MM function unit 11 is configured to originate an emergency call via the UMTS cell notified from the RRC (UMTS) function unit 13, as illustrated in step S1013.

In this case, the MM function unit 11 may be configured to originate the emergency call via the UMTS cell without performing a location registration in the UMTS-scheme network, or may be configured to originate the emergency call via the UMTS cell after performing the location registration in the UMTS-scheme network.

In the UMTS-scheme network, a user identifier IMSI assigned fixedly to the mobile station UE can be used to originate the emergency call without performing the location registration.

The MM function unit 11 can shorten a time required for connecting to the emergency call by originating the emergency call via the UMTS cell without performing the location registration in the UMTS-scheme network.

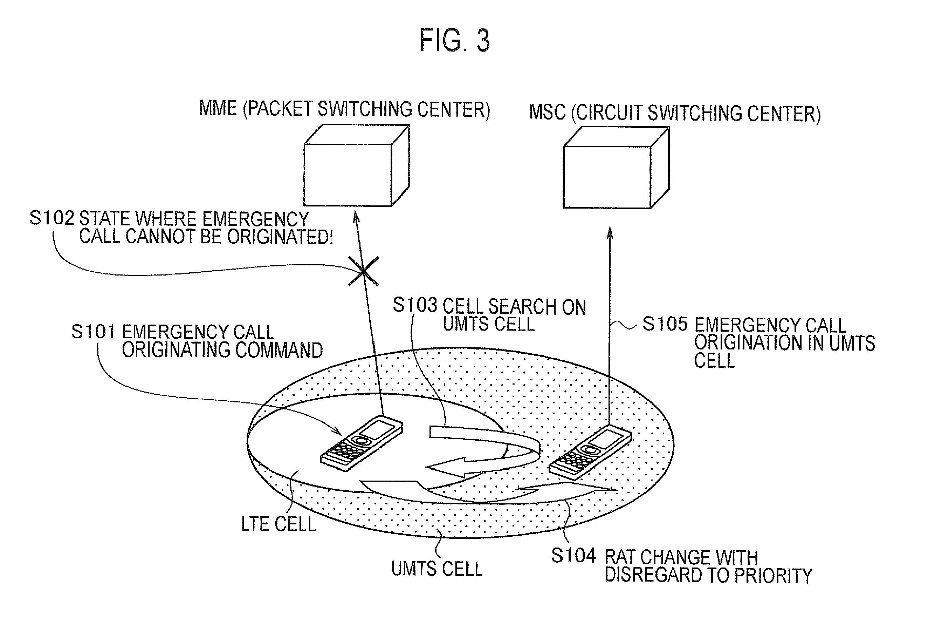

With reference to Fig. 3, the operation in which the mobile station UE originates the emergency call in the mobile communication system according to this embodiment will be explained.

As illustrated in Fig. 3, if the mobile station UE camping on the LTE cell detects an emergency call originating command by a user operation, etc., in step S101, then the mobile station UE recognizes in step S102 a state where it is not possible to originate the emergency call in the LTE cell (when the mobile station UE does not possess the M-TMSI paid out by the packet switching center MME illustrated in Fig. 3, or when an originating regulation is conducted in the LTE cell, for example).

In step S103, the mobile station UE performs the cell search process on a frequency used in the UMTS cell.

In step S104, the mobile station UE starts camping on the UMTS cell when determining that the camping on the UMTS cell is possible, even when the camp-on priority in the UMTS cell is lower than the camp-on priority in the LTE cell and the reception level in the LTE cell satisfies a condition to continue as the camp-on cell.

In step The mobile station UE originates the emergency call via the UMTS cell.

In this case, as a mode settable to the mobile station UE, there are a "first mode" in which the emergency call in the "ECM_IDLE state" is originated without the use of the CSFB, and a "second mode" in which the emergency call in the "ECM_IDLE state" preferentially using the CSFB is originated.

It is noted that when the mobile station UE is set to the first mode (and possesses the M-TMSI), the mobile station UE may be configured to originate the emergency call via the UMTS cell, when detecting the emergency call originating trigger in a state where the mobile station UE is camping on the LTE cell, and when it is determined that the camping on the UMTS cell is possible.

On the other hand, when the mobile station UE is set to the second mode (irrespective of whether or not it possesses the M-TMSI), the mobile station UE may be configured to switch the first connection to the second connection in the UMTS-scheme, network after establishing the first connection via the LTE cell so as to originate the emergency call via the second connection, when detecting the emergency call originating trigger in a state where the mobile station UE is camping on the LTE cell, and when it is determined that the camping on the UMTS cell is possible.

According to the mobile station based on the first embodiment of the present invention, if the emergency call originating trigger is detected during camping on the LTE cell, it is possible to originate the emergency call via the UMTS cell from which communication is expected, even if the M-TMSI is not possessed.

The above-mentioned aspects of the embodiment may be expressed as follows:

A first aspect of this embodiment is summarized as a mobile station UE including an emergency call originating process unit configured to originate an emergency call via a cell under the control of the UMTS-scheme network (second network) having a CS network (circuit switching network), when an emergency call originating trigger is detected while camping on a cell under the control of the LTE-scheme network (first network) that is a PS dedicated network (packet switching dedicated network) and when it is determined that the camping on a cell under the control of the UMTS-scheme network is possible.

In the first aspect of this embodiment, the emergency call originating process unit may be configured to determine that the camping on the cell under the control of the UMTS-scheme network is possible when a reception level in the cell under the control of the UMTS-scheme network is larger than a predetermined threshold value.

In the first aspect of this embodiment, the emergency call originating process unit may be configured to originate the emergency call via the cell under the control of the UMTS-scheme network, even when the reception level in the cell under the control of the UMTS-scheme network is smaller than the reception level in the cell under the control of the LTE-scheme network, if the emergency call originating trigger is detected while camping on the cell under the control of the LTE-scheme network and if it is determined that the camping on the cell under the control of the UMTS-scheme network is possible.

In the first aspect of this embodiment, the emergency call originating process unit may be configured to originate the emergency call via the cell under the control of the UMTS-scheme network, even when a priority used when determining a camp-on cell set to the cell under the control of the UMTS-scheme network is lower than a priority used when determining a camp-on cell set to the cell under the control of the LTE-scheme network, if the emergency call originating trigger is detected while camping on the cell under the control of the LTE-scheme network and if it is determined that the camping on the cell under the control of the UMTS-scheme network is possible.

In the first aspect of this embodiment, the emergency call originating process unit may be configured to originate the emergency call via the cell under the control of the UMTS-scheme, network, without performing a location registration in the UMTS-scheme network, if the emergency call originating trigger is detected while camping on the cell under the control of the LTE-scheme network and if it is determined that the camping on the cell under the control of the UMTS-scheme network is possible.

In the first aspect of this embodiment, the emergency call originating process unit may be configured to switch a first connection to a second connection in the UMTS-scheme network so as to originate the emergency call via the second connection, when the emergency call originating trigger is detected while the first connection is established in the LTE-scheme network.

In the first aspect of this embodiment, when the mobile station UE is set to a first mode, the emergency call originating process unit may be configured to originate the emergency call via the cell under the control of the UMTS-scheme network, when the emergency call originating trigger is detected while camping on the cell under the control of the LTE-scheme network and when it is determined that the camping on the cell under the control of the UMTS-scheme network is possible, and when the mobile station UE is set to a second mode, the emergency call originating process unit may be configured to switch a first connection to a second connection in the UMTS-scheme network after establishing the first connection via the cell under the control of the LTE-scheme network so as to originate the emergency call via the second connection, when the emergency call originating trigger is detected while camping on the cell under the control of the LTE-scheme network and when it is determined that the camping on the cell under the control of the UMTS-scheme network is possible.

A second aspect of this embodiment is summarized as a mobile communication method including the steps of: determining whether or not a camping in a cell under the control of the UMTS-scheme, network having a CS network in the mobile station UE is possible, when an emergency call originating trigger is detected while camping on a cell under the control of the LTE-scheme network that is a PS dedicated network; and originating an emergency call via the cell under the control of the UMTS-scheme network, when it is determined that the camping on the cell under the control of the UMTS-scheme network in the mobile station UE is possible.

The operation of the above-described radio base station eN, the mobile station UE, the packet switching center MME and the circuit switching center MSC may be implemented by a hardware, may also be implemented by a software module executed by a processor, and may further be implemented by the combination of the both.

The software module may be arranged in a storing medium of an arbitrary format such as RAM (Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIA may be arranged in the radio base station eN, the mobile station UE, the packet switching center MME and the circuit switching center MSC. As a discrete component, such a storing medium and processor may be arranged in the radio base station eN, the mobile station UE, the packet switching center MME and the circuit switching center MSC.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile station, comprising:
an emergency call originating process unit configured to originate an emergency call via a cell under the control of a second network having a circuit switching network, when an emergency call originating trigger is detected while camping on a cell under the control of a first network that is a packet switching dedicated network, and when it is determined that camping on the cell under the control of the second network is possible.

2. The mobile station according to claim 1, wherein
the emergency call originating process unit is configured to originate the emergency call via the cell under the control of the second network, when the emergency call originating trigger is detected while camping on the cell under the control of the first network, when there is no M-TMSI (M-Temporary Mobile Subscriber Identity) paid out by a packet switching center under the control of the first network, and when it is determined that the camping on the cell under the control of the second network is possible.

3. The mobile station according to claim 1, wherein
the emergency call originating process unit is configured to determine that the camping on the cell under the control of the second network, when a reception level in the cell under the control of the second network is larger than a predetermined threshold value.

4. The Mobile station according to claim 1, wherein
the emergency call originating process unit is configured to originate the emergency call via the cell under the control of the second network, even when the reception level in the cell under the control of the second network, is smaller than the reception level in the cell under the control of the first network, when the emergency call originating trigger is detected while camping on the cell under the control of the first network and when it is determined that the camping on the cell under the control of the second network is possible.

5. The mobile station according to claim 1, wherein
the emergency call originating process unit is configured to originate the emergency call via the cell under the control of the second network, even when a priority used when determining a camp-on cell set to the cell under the control of the second network is lower than a priority used when determining a camp-on cell set to the cell under the control of the first network, if the emergency call originating trigger is detected while camping on the cell under the control of the first network and if it is determined that the camping on the cell under the control of the second network is possible.

6. The mobile station according to claim 1, wherein
the emergency call originating process unit is configured to originate the emergency call via the cell under the control of the second network, without performing a location registration in the second network, when the emergency call originating trigger is detected while camping on the cell under the control of the first network and when it is determined that the camping on the cell under the control of the second network is possible.

7. The mobile station according to claim 1, wherein
the emergency call originating process unit is configured to switch a first connection to a second connection in the second network so as to originate the emergency call via the second connection, when the emergency call originating trigger is detected while the first connection is established in the first network.

8. The mobile station according to claim 1, wherein
when the mobile station is set to a first mode, the emergency call originating process unit is configured to originate the emergency call via the cell under the control of the second network, when the emergency call originating trigger is detected while camping on the cell under the control of the first network and it is determined that the camping on the cell under the control of the second network is possible; and
when the mobile station is set to a second mode, the emergency call originating process unit is configured to switch a first connection to a second connection in the second network after establishing the first connection via the cell under the control of the first network so as to originate the emergency call via the second connection, when the emergency call originating trigger is detected while camping on the cell under the control of the first network and it is determined that the camping on the cell under the control of the second network is possible.

9. A mobile communication method, comprising the steps of:
determining whether or not a camping on a cell under the control of a second network having a circuit switching network is possible, when an emergency call originating trigger is detected while camping on a cell under the control of a first network that is a packet switching dedicated network in the mobile station; and
originating an emergency call via the cell under the control of the second network, when it is determined that the camping on the cell under the control of the second network in the mobile station is possible.
